# EUROPEAN PATENT APPLICATION

(11) **EP 1 486 886 A1**
(43) Date of publication of application: **15.12.2004**
(21) Application number: 03291392.3
(22) Date of filing: 12.06.2003
(51) Int. Cl.: G06F 17/30

(54) **Systems, protocols and propagation mechanisms for managing information in a network environment**

(71) Applicant: Hewlett-Packard Development Company, L.P., Houston, TX 77070 (US)
(72) Inventor: Perret, Stephane, 38400 St Martin d'heres (FR); Riche, Stephanie, 38000 Grenoble (FR); Brebner, Gavin, 38410 St. Martin D'Uriage (FR)
(74) Representative: Lloyd, Richard Graham

(57) **Abstract**

A system for managing profile information in a heterogeneous network of devices hosting master and copy data in accordance with a coherence protocol, the master and copy data being associated by way of a first lease, the copy data automatically being invalidated upon expiry of the lease so that the master data may be modified in conformity with the protocol.

## Description

### Technical Field of the Invention

This invention relates, in broad terms, to the general field of distributed data environments and relates more particularly, although not exclusively, to the use of distributed computer network environments to store, use and manage profile information.

### Background to the Invention and Summary of the Prior Art

This invention is concerned, in general terms, with the administration and management of information - such as profile information - on networks of computers or similar data-processing devices. The invention relates especially (although not exclusively) to the administration of such information across a heterogeneous network of devices, and focuses on, without being limited to, data coherence/consistency and availability.

In this specification, the term "profile" is intended to refer, in broad terms, to a manner and means of characterising an element, such as data or a user, within a particular context or environment. A user profile, therefore, may characterise/describe an individual by setting forth identifying characteristics of the individual such as the individual's name, nationality and language/web-browsing preferences. Profile information of this type can be utilised by a device to tailor offered services in accordance with various preferences and can be used, in addition, to verify the identity of an individual when network resources are accessed.

The definition of profile data, therefore, is broad and can be thought of as including almost any type of data which is specific to a user and allows some type of personalisation to be effected. Whatever the nature of the data, however, profiles are usually made up of a number of discrete data files containing the characterising details.

It is known, particularly in computer network environments, to operate in a distributed manner, whereby certain parts of an overall collection of data are distributed and sometimes replicated across a network, thus residing on several different devices, acting as network data hosts. This distributed approach, whilst offering advantages in terms of decreased processing power requirements at certain network nodes, does give rise to security and data consistency concerns, as the replication of data potentially results in inconsistency problems.

Data consistency (known generally in the field of computing as coherence) refers to the problem of ensuring that replicated sets of data, distributed across the network, are not contradictory, in that copy sets are kept up to date, in line with one another.

Attempts to address this issue fall generally into two camps: the first uses a synchronisation technique, whereby the network devices undergo, on a sporadic or periodic basis, a reconciliation process such as might occur, for example, when a PDA or laptop is docked with a base station. The reconciliation process in effect constitutes a check, during which the various networked devices having allied copies of data verify that each possesses the most up-to-date version of the data in question. Whilst this approach allows copies of data to be updated on a stand-alone basis, with other data copies only becoming involved during a subsequent reconciliation step, it can give rise to inconsistent behaviour in between synchronisations, in that out-of-date information can be provided by a remote device that has not yet been able to reconcile its data with a disconnected host.

The second approach is based on the use of dedicated coherence protocols such as a write-invalidate protocol. It should be understood that the term "protocol" is intended to refer, broadly, to schemes, sets of rules, established processes and routines, as will be appreciated by those skilled in the relevant art. A write-invalidate protocol might require the identification/nomination of one data set as master data, whereby other copies of the data are invalidated (and hence made unreadable) prior to the master data undergoing any write/addition/deletion modifications. As reading rights to the data copies have effectively been disabled, the use of such a protocol means that it should be impossible for any out-of-date copy data to be accessed and that, on the contrary, the ability to read copy data implies that the copy data is up-to-date. It will be understood, in that regard, that the terms "master" and "copy" data are used herein simply to distinguish the two data sets, with no hierarchical or authoritative differentiation necessarily being implied.

An important disadvantage of such write-invalidate protocols, however, is that write access cannot be obtained to a master host if devices hosting associated copy data cannot be reached, such as may arise if the copy hosts are disconnected from the network, at that time. Under such circumstances, the practical effect is that both the master and copy data become out-of-date, as it is not possible to invoke a desired update procedure.

Our co-pending European and US patent applications (01410136.4 and 10/284080), the teachings of which are incorporated herein by reference, disclose the use of write-invalidate protocols in profile information management techniques and disclose processes for the allocation of administrative rights over profile nodes of a heterogeneous device network.

### Summary of the Invention

In accordance with a first aspect of the present invention, there is provided a system for managing profile information in a heterogeneous network of devices hosting master and copy data in accordance with a coherence protocol, the master and copy data being associated by way of a first lease, the copy data automatically being invalidated upon expiry of the lease so that the master data may be modified in conformity with the protocol.

As will be understood from a thorough reading of this specification, the term "lease" is used in a broad sense, to refer to an association or relationship between two entities that has a finite - but possibly renewable - duration, lifetime or validity period.

The coherence protocol may allow modifications to the master data to be made prior to expiry of the first lease. Such modifications may be made without invalidating other copies. The coherence protocol may allow such modifications only in relation to specified data types. The data types may be specified by a user of the network.

The duration of the first lease may be dependant upon the frequency with which modifications to the master data are required or likely to be required.

The dependency may be inversely-proportional.

The coherence protocol may be a write-invalidate protocol.

In a preferred embodiment, invalidation of the copy data may occur despite disconnection from the network of the copy data host device.

The master data may be associated with a presence supervisor by way of a second lease having a greater duration than that of the first.

The presence supervisor may have control of a backup copy of the master data.

In the event that the master data is disconnected from the network upon expiry of the second lease, a backup lease may be granted to a backup device.

It will be understood, of course, that the backup lease, being separate from the original second lease, does not necessarily "backup" the second lease, as such, but that the term "backup lease" is intended to illustrate that it comes into being where renewal of the second lease is not possible. Thus, when the master data is connected to the network upon expiry of the second lease, the second lease may simply be renewed, with no backup lease being needed.

The backup device may be provided, by the presence supervisor, with the backup copy of the master data.

The backup device may be selected by the presence supervisor and may be designated as such as a result of its network availability.

The network availability of the device may take account of the time spent by the device in operative connection with the network.

Reconnection to the network of the master data, subsequent to the granting of the backup lease, may lead to the erstwhile master data being designated as copy data.

The presence supervisor may be operative, prior to expiry of the second lease, dynamically to transfer the second lease to a different host having greater network availability than the first. To avoid any mater data duplication, this may require invalidation of the original master host.

The presence supervisor may be hosted by a device having secure and sustained network connectivity.

The master data may have write access rights.

The duration of the second lease may be dependent upon the network availability of the master data.

Greater network availability may allow a shorter second lease to be used.

The device hosting the master data may also host a presence manager operative to monitor modifications of the master data and to convey details of the modifications to the presence supervisor, whereby the backup copy may be updated.

The modifications may be conveyed to the presence supervisor prior to being conveyed to the or each device hosting relevant copy data.

The presence manager may be operative to invalidate the copy data upon expiry of the first lease.

The network may comprise a plurality of discrete sets of master data, with the presence supervisor preferably having control of a backup copy of each set.

Upon introduction of a new device to the network, the presence supervisor may be operative to upload at least some of the master data thereto, whereby the new device may provide additional network functionality in accordance with the coherence protocol.

In accordance with a second aspect of the present invention, there is provided a method of managing master and copy data in a network of devices using a write-invalidate protocol, the protocol having a leasing rule under which the master and copy data are associated by way of a first lease, expiry of the first lease causing or allowing the copy data to be invalidated whereby a modification may be made to the master data.

In the write-invalidate protocol, the master data may be associated with a supervisory third party by way of a second lease, longer than the first, with expiry of the second lease, with the master data in a disconnected state, resulting in the granting of a backup lease to a backup device.

The invention, in its second aspect, may comprise one or more of the features set out in relation to the first aspect.

In accordance with a third aspect of the present invention, there is provided a data propagation mechanism for use in managing master and copy data in a network of host devices, each device hosting master data being provided with a presence manager operative, upon detection of a request to modify the master data, to send details of the modification to a third party repository.

In a preferred embodiment, the details are sent prior to any of the data copies being updated.

The invention, in its third aspect, may comprise one or more of the features set out in the preceding paragraphs.

### Brief Description of the Drawings

Specific and non-limiting embodiments of the present invention will now be described in greater detail, but strictly by way of example only, with reference to the accompanying drawings, of which:
FIGURE 1 is a simplified, schematic, representation of a profile distribution system;
FIGURE 2 is a flow diagram illustrating the detection of master data modification requests;
FIGURE 3 is a flow diagram illustrating the key elements of a master-copy leasing system;
FIGURE 4 is a flow diagram illustrating the steps involved upon reconnection of a disconnected copy host; and
FIGURE 5 illustrates the steps involved in detecting the absence of a master data host and the subsequent granting of a backup lease.

### Detailed Description and Best Mode of the Invention

A distributed profile is a middleware software component incorporating a user-accessible interface that allows a user to store and manage profile information on a distributed basis. In this non-limiting embodiment, the profile information is distributed across four network devices which, at least from time-to-time, are interconnected via a LAN, for example. Other network types are naturally also envisaged.

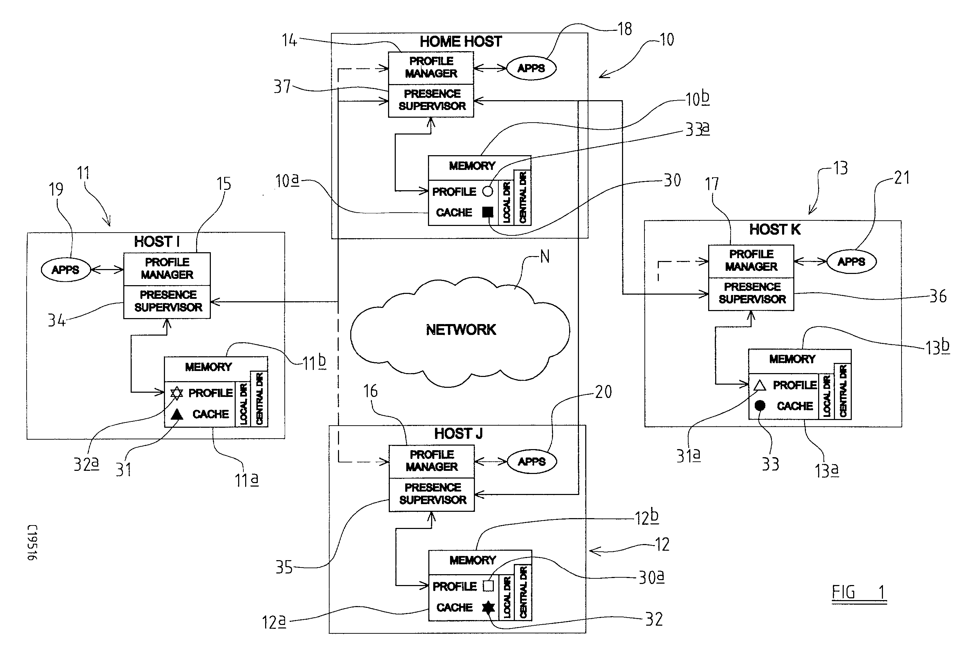

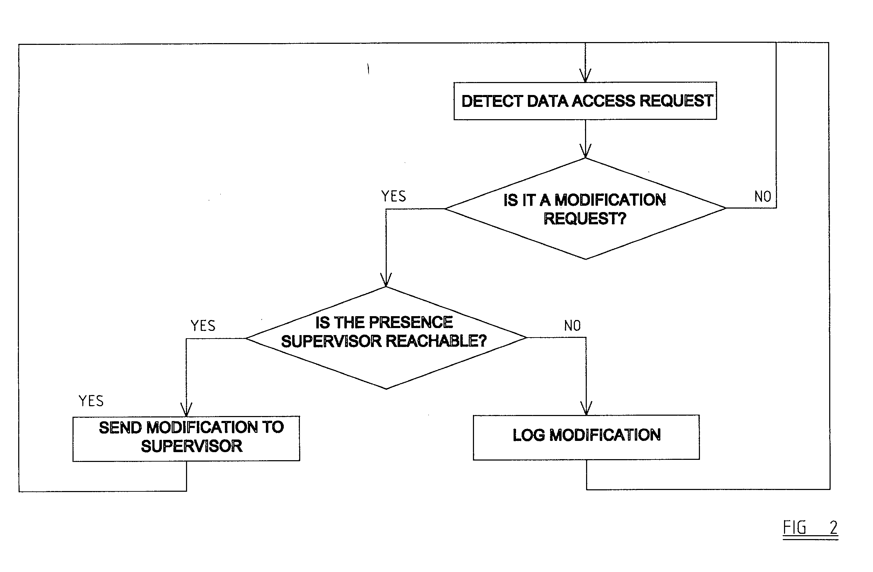

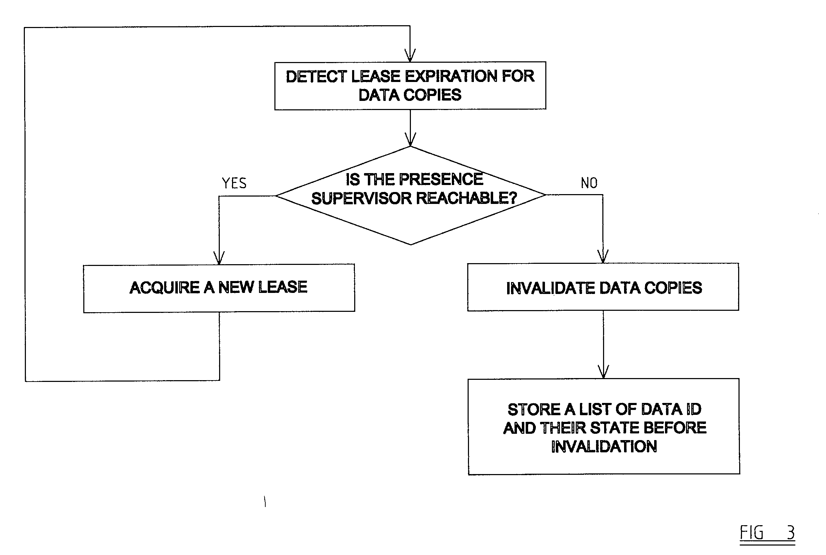

Figure 1 shows a manner by which profile information (known collectively as a profile "bank") is distributed across four devices - a home device 10, storing management information relating to the structure of the profile bank, and remote hosts 11, 12 and 13, all interconnected with one another via a common network N.

In accordance with the distributed nature of the system, each device 10 to 13 incorporates or is operatively associated with a profile cache 10a, 11a, 12a and 13a, each being provided in a local memory area 10b, 11b, 12b and 13b. In accordance with a dynamically-allocated administration and distribution protocol (not itself part of the present invention), each device hosts master data and at least one copy of master data held on at least one of the other devices. Thus, for a given set of master data in the profile bank, a copy thereof will be found at a separate network location, so as to allow accelerated access to data, via a local device, and to facilitate access to the data when the master host is disconnected from the network, for example. Access to hosted master data, via the local host device, is obtained using local profile managers 14, 15, 16 and 17, with the profile managers handling data requests from other devices over the network, managing their local profile caches and handling requests for profile information from local applications 18, 19, 20 and 21. In accordance with the distributed data paradigm, the array of profile caches 10a, 11a, 12a and 13a constitutes a distributed profile node space. Thus, the node space corresponds physically to the distributed memory locations present in each of the devices shown.

As mentioned above, administration of profile information is performed by a profile manager having administrative rights over its locally-hosted profile information. The profile manager is resident on (or at least operatively associated with) a device 10, referred to herein as a master device in view of its relationship with certain master data, as described below. Referring to Figure 1, the master device 10 has administration rights over master data 30, device 11 has administration rights over master data 31, device 12 over data 32 and device 13 over data 33.

The profile cache (a temporary but not necessarily transient data store) of each device also hosts appropriate copies of other master data: thus, for example, device 10 hosts copy data 33a, device 11 hosts copy data 32a, device 12 hosts copy data 30a and device 13 hosts copy data 31a. As explained in our co-pending European application no. 01410136.4, filed 30 October 2001, changes in the network and the devices constituting the network can result in migration of these administration rights thus allowing dynamic data ownership and control over location. Mobile agents may be used in this regard. Thus, specific administrative rights for one or more specified profile modes (master data sets) may be dynamically allocated to a device whereby that device then manages, using its associated profile manager, access rights to the locally-stored master data.

As shown in Figure 1, devices 11, 12 and 13 each host a presence manager 34, 35 and 36, with the presence managers acting, in part, to monitor/detect modifications of locally-hosted master data and to send details of the modifications to a presence supervisor 37 resident on the home device 10. As is explained further below, this coherence protocol monitoring allows up-to-date copies of each master data set to be stored/kept under the control of the presence supervisor 37, thus providing for the backup mechanism described herein. The coherence protocol in this example is based upon a write-invalidate protocol, whereby copies of data are invalidated (i.e. read-disabled) where a write operation to a target master is required. Subsequent to the modification, the amended master data is replicated through the distributed profile in accordance with a distribution aspect of the coherence protocol and an appropriate/available data communication path.

In this embodiment, however, each master and associated copy data set are associated by way of a lease having a finite duration, with the coherence protocol specifying that the copy data will become invalid upon expiry of the lease, thus permitting a modification to the master data to be made. In order to maintain availability of the copy data, in normal circumstances, an automatic lease renewal process is envisaged, by which the master host negotiates with the presence supervisor 37 to obtain the grant of a lease renewal. It will naturally be understood that, in such normal circumstances, where this lease is valid and subsisting, a write request to master data will lead, in conventional manner, to invalidation of the copy data, by way of an appropriate invalidation command being dispatched.

It is envisaged that the duration of the above-identified master-copy lease will be influenced, at least in part, by the network availability of the master host. At one extreme, where the host is always or usually available (such as in the case of a home/corporate PC, for example) a relatively short lease can be used, as the master host will most likely be on-line so as to allow negotiation with the presence supervisor and thus for renewal of the lease concerned. The length of the lease may also be influenced, in part, by the nature or temporal sensitivity of the data in issue. Thus, where the data is highly changeable (or likely to be so) in that frequent modifications are made to the data, it would be prudent to employ a relatively short lease so as to ensure that, in the event of a disconnection from the network of the master device, the master-copy lease will become invalid, thus denying read access to the out-of-date information. On the other hand, where the data is less variable (e-mail addresses in an electronic address book, for example), the use of a long lease might well be acceptable, as disconnection of the master host from the network would not then deny read access to the copy data which would still very likely be valid.

Invalidation of the cached copy data may fall under the authority of the locally-resident presence manager or the cached copy data may alternatively have a built-in temporal lifetime element that allows self-invalidation to be effected. In other words, the cached copy data may effectively have an internal clock running so that self-invalidation can occur after a predetermined, finite, period.

The monitoring of master data modification requests, by the local presence manager, is shown, in step-wise manner, in Figure 2. The "log modification" step illustrates that, where an unsuccessful attempt, by the presence manager, is made to contact the presence supervisor, the presence manager is operative to store (locally) details of the modification so that the details may be forwarded to the presence supervisor when the supervisor again becomes reachable.

Figure 3 illustrates, again in step-wise manner, the elements involved in the master-copy lease renewal process, effected under the authority of a local presence manager. As explained above, the presence manager is responsible for detecting master-copy lease expiration, with the presence manager attempting to contact the presence supervisor upon expiry of a given lease. Where the presence supervisor is reachable, a new lease is acquired and the validity of the copy data restored. On the other hand, where the presence supervisor is not reachable, the copy data remains in an invalid condition, with a record then being made, by the presence manager, of all the copy data sets concerned along with their states immediately prior to invalidation. "States" in this regard refers, for example, to whether the copy data sets were, at that time, the subject of a read operation, and by what reading entity. This state information is used in a subsequent recovery operation when the presence supervisor is reconnected to the network.

The present system also provides for a second, longer lease, associated with the master data itself, so as to provide for a mechanism that increases data availability in the case of master host removal or failure. Specifically, the second lease, which might perhaps be at least ten times as long as the first (master:copy) lease, is associated with the master host and the presence supervisor, with expiry of the second lease, with a given master host being disconnected at that time, indicating to the presence supervisor that a potential problem exists and that updates to the relevant copy data will not thus be possible. In the normal course of events, where the master host, copy host and presence supervisor are all present and operatively connected on the network, both the first and second leases will be renewed by the presence supervisor, although where, upon expiry of the second lease, it does not prove possible for the presence supervisor to contact the master host, a backup procedure may be brought into operation. As explained above, modifications to the various master data sets are conveyed automatically and to the presence supervisor so that the presence supervisor is provided with a recent record of each master data set. Where, upon expiry of the second lease, and where it is not possible to invoke a connection to the master host concerned, the presence supervisor will pass administrative responsibility for the master data in issue to a different networked host, in accordance with network availability criteria. Evidently, it is important, in the case of master data, that the hosting device be present on the network for a substantial proportion of the time in which the network is in operation, and the presence supervisor is thus operative to allocate administrative responsibility for the "expired" master data to an alternative host satisfying these availability criteria. The backup data for which the presence supervisor is responsible is conveyed to the thus-identified backup device so that the newly identified master host is provided with a recent version of the data concerned.

In a further attempt to ensure data consistency, propagation of the logged data modifications is undertaken on a conditional basis. Subsequent to the presence manager detecting a reconnection with the presence supervisor, the modification log is sent: when the supervisor receives this log it applies the modifications to the backup copy of the master data that it maintains. Where the master lease has not yet expired, the modifications are then propagated unconditionally to the associated data copies. On the other hand, where the original master lease has expired, the modifications are applied only if the lease, in the meantime, has not been granted to a backup device. Subsequently, the presence manager attempts to retrieve the former cache states for each copy data that had been invalidated due to the expiration of the associated master:copy (first) lease.

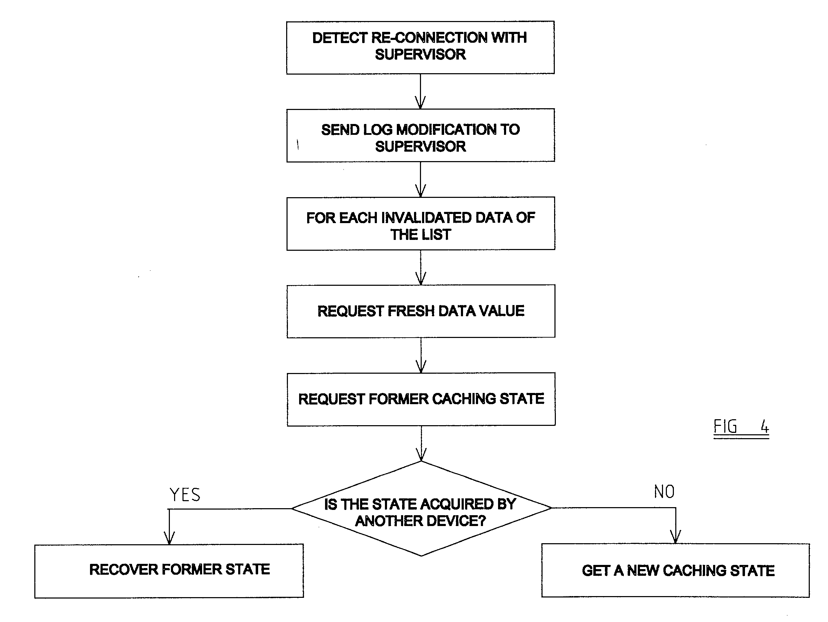

This is shown, in stepwise manner, in Figure 4.

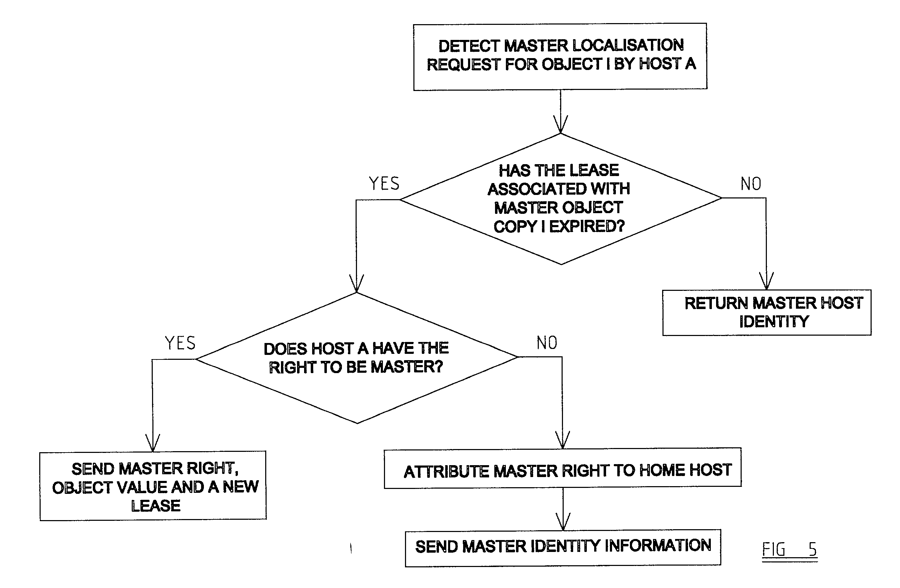

As shown in Figure 5, each of the networked devices is able, in response to a user demand or a certain event, to request master "localisation" - in effect, seeking assignment of the master authority (and hence administrative rights) over a given master data set. If the previously identified master host is absent for a period of time exceeding the duration of the second (master) lease, then the requesting host may be designated as the new host for the master data in question. Where, upon receipt of a localisation request, the presence supervisor establishes that the pre-existing master lease has not yet expired, then the localisation request is forwarded to a central directory (see Figure 1; host 10) that returns the master host identity.

Under such circumstances, requestor rights may become relevant. Thus, account may be taken, where a particular device in seeking master authority of certain data, of the nature and availability of the requesting device. This can prevent master authority being granted to a device that is infrequently connected to other network devices, which would render modification of the data very difficult. Various policies (not themselves part of the present invention) may play a part in this decision process.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A system for managing profile information in a heterogeneous network of devices hosting master and copy data in accordance with a coherence protocol, the master and copy data being associated by way of a first lease, the copy data automatically being invalidated upon expiry of the lease so that the master data may be modified in conformity with the protocol.

2. A system according to claim 1 wherein the coherence protocol allows modifications to the master data to be made prior to expiry of the first lease.

3. A system according to claim 2 wherein the coherence protocol allows such modifications only in relation to specified data types.

4. A system according to claim 3 wherein the data types are specified by a user of the network.

5. A system according to any one of the preceding claims wherein the duration of the first lease is dependant upon the frequency with which modifications to the master data are required or likely to be required.

6. A system according to claim 5 wherein the dependency is inversely-proportional.

7. A system according to claim 1 wherein the protocol is a write-invalidate protocol.

8. A system according to any one of the preceding claims wherein invalidation of the copy data occurs despite disconnection from the network of the copy data host device.

9. A system according to any one of the preceding claims wherein the master data is associated with a presence supervisor by way of a second lease having a greater duration than that of the first.

10. A system according to claim 9 wherein the presence supervisor has control of a backup copy of the master data.

11. A system according to claim 9 or claim 10 wherein, in the event that the master data is disconnected from the network upon expiry of the second lease, a backup lease is granted to a backup device.

12. A system according to claim 11 wherein the backup device is provided, by the presence supervisor, with the backup copy of the master data.

13. A system according to claim 11 or claim 12 wherein the backup device is selected by the presence supervisor.

14. A system according to claim 13 wherein the backup device is designated as such as a result of its network availability.

15. A system according to claim 14 wherein the network availability of the device takes account of the time spent by the device in operative connection with the network.

16. A system according to any one of claims 11 to 15 wherein reconnection to the network of the master data, subsequent to granting of the backup lease, leads to the erstwhile master data being designated as copy data.

17. A system according to any one of claims 10 to 16 wherein the presence supervisor is operative, prior to expiry of the second lease, to dynamically transfer the second lease to a different host having greater network availability than the first.

18. A system according to any one of claims 9 to 17 wherein the presence supervisor is hosted by a device having secure and sustained network connectivity.

19. A system according to any one of the preceding claims wherein the master data has write access rights.

20. A system according to any one of claims 9 to 19 wherein the duration of the second lease is dependent upon the network availability of the master data.

21. A system according to claim 20 wherein a greater network availability allows a shorter second lease to be used.

22. A system according to any one of claims 10 to 21 wherein the device hosting the master data also hosts a presence manager operative to monitor modifications to the master data and to convey details of the modifications to the presence supervisor, whereby the backup copy may be updated.

23. A system according to claim 22 wherein the modifications are conveyed to the presence supervisor prior to being conveyed to the or each device hosting relevant copy data.

24. A system according to claim 22 or claim 23 wherein the presence manager is operative to invalidate the copy data upon expiry of the first lease.

25. A system according to any one of claims 9 to 24 wherein the network comprises a plurality of discrete sets of master data, and wherein the presence supervisor has control of a backup copy of each set.

26. A system according to claim 25 wherein, upon introduction of a new device to the network, the presence supervisor is operative to upload at least some of the master data thereto, whereby the new device may provide additional network functionality in accordance with the coherence protocol.

27. A method of managing master and copy data in a network of devices using a write-invalidate protocol, the protocol having a leasing rule under which the master and copy data are associated by way of a first lease, expiry of the first lease causing or allowing the copy data to be invalidated whereby a modification may be made to the master data.

28. A method according to claim 27 wherein the master data is associated with a supervisory third party by way of a second lease, longer than the first, with expiry of the second lease, with the master data in a disconnected state, resulting in the granting of a backup lease to a backup device.

29. A data propagation mechanism for use in managing master and copy data in a network of host devices, each device hosting master data being provided with a presence manager operative, upon detection of a request to modify the master data, to send details of the modification to a third party repository.

30. A data propagation mechanism according to claim 29 wherein the details are sent prior to any of the data copies being updated.
